# EUROPEAN PATENT SPECIFICATION

(11) **EP 1 982 845 B1**
(45) Date of publication and mention of the grant of the patent: **04.06.2014**
(21) Application number: 07425231.3
(22) Date of filing: 19.04.2007
(51) Int. Cl.: B44D 3/00, G01J 3/52, G09B 19/00

(54) **Method for producing colour sample charts and colour sample chart so obtained**
Verfahren zur Herstellung von Farbtonkarten und damit hergestellte Farbtonkarte
Procédé pour produire cartes de couleur et carte ainsi obtenue

(43) Date of publication of application: 22.10.2008
(73) Proprietor: Matherson S.p.A., 24030 Presezzo (BG) (IT)
(72) Inventor: Milanesi, Marco, 24030 Presezzo (Bergamo) (IT)
(74) Representative: Provvisionato, Paolo

(56) References cited:
- EP-A- 1 588 866
- DE-A1- 3 209 028
- DE-U1- 9 114 530
- DE-U1- 20 018 788
- US-A- 1 568 076

## Description

The present invention relates to the field of colour sample charts. Colour sample charts are used in various fields, for example, but not exclusively, in order to present to the general public examples of colours and shades which may be imparted to various products, for example fabrics, wall paints, vehicle bodywork etc., combined on an easily handled support. Products of the colour sample chart type comprise, although non-exhaustively, colour cards, "swatches", and in general various kinds of catalogues, brochures, sheets, booklets and the like comprising an ordered arrangement or collection of differently coloured bands, strips, labels and, more generally, areas on a support which is generally of paper.

The primary purpose of colour sample charts is, on a support generally of paper, to render as identically as possible the visual effect of the actual coloured product, whether it be, for example, a coloured fabric, a tiled surface, a wall paint, vehicle bodywork and so on. The user of colour sample chart must be able to obtain a visual impression which is as close as possible to the real finish of the actual product, not solely with regard to colour shade, but also with regard to properties of gloss, contrast, iridescence, fluorescence, grain etc.

Normally, the colouring products used in colour sample charts are specifically intended for application onto certain supports, generally of paper, which often differ from the intended supports for the original colouring products which are represented by the colour samples. For the purposes of producing colour sample charts, the properties of the original colouring products are frequently detected by means of spectrophotometers and the visual appearance of said original colouring products is reproduced with different colouring products, the formulation of which often requires numerous attempts and extensive research to identify the optimum formulation.

Document DE-4413010 relates to a method for producing colour sample charts for water-based paints, in which a paper or paperboard support in sheet or reel form is sealed in a single pass, at least on the side bearing the colour samples, with a waterproof finish by means of a printing method. The water-based paint is then applied onto the waterproof layer to create the colour sample layer. The method described in said document is quite complex and exhibits low productivity due to the necessity of waterproofing the paper support with a sealant before the colour samples can be applied thereto.

Document DE-3209028 refers to the production of color cards on coated or offset paper, as well as plastic-coated paper or plastic sheets.

Italian patent no. 1320959 from the same applicant relates to the production of a sample chart on a plastics support which permits excellent rendition, especially of colour samples of metallic-effect paint. Nevertheless, despite the good results achieved by said method, it has been found that, in some cases, the plastics film may render a slightly too glossy impression of the colour in question, quite apart from the fact that the plastics film is in any event a material which is intrinsically more delicate than a paper material.

The present invention is intended to overcome various shortcomings of the prior art, including the above-stated shortcomings, and in particular to provide a method for producing colour sample charts, and colour sample charts produced in said manner, which are simple and economic to produce, reliable over time, with excellent rendition of the visual properties of the original products of which the sample charts are intended to provide a specimen.

In order to achieve the above-stated aims, the invention provides a method for producing colour sample charts which has the features set out in claim 1 below. The invention also provides a colour sample chart which has the features set out in claim 7 below. The invention also relates to the specific use of a paper of the one side coated type and to the specific use of a metallic-effect paint which have the features respectively set out in claims 12 and 16 below. The dependent claims set out further advantageous features of the invention.

Further features and advantages will emerge from the following description of a preferred example of embodiment, with reference to the attached figures in which:
- Figure 1 shows a perspective view of a colour card,
- Figure 2 shows a perspective view of a colour swatch, and
- Figure 3 shows a schematic view in enlarged scale of a cross-section through the colour sample chart of the present invention.

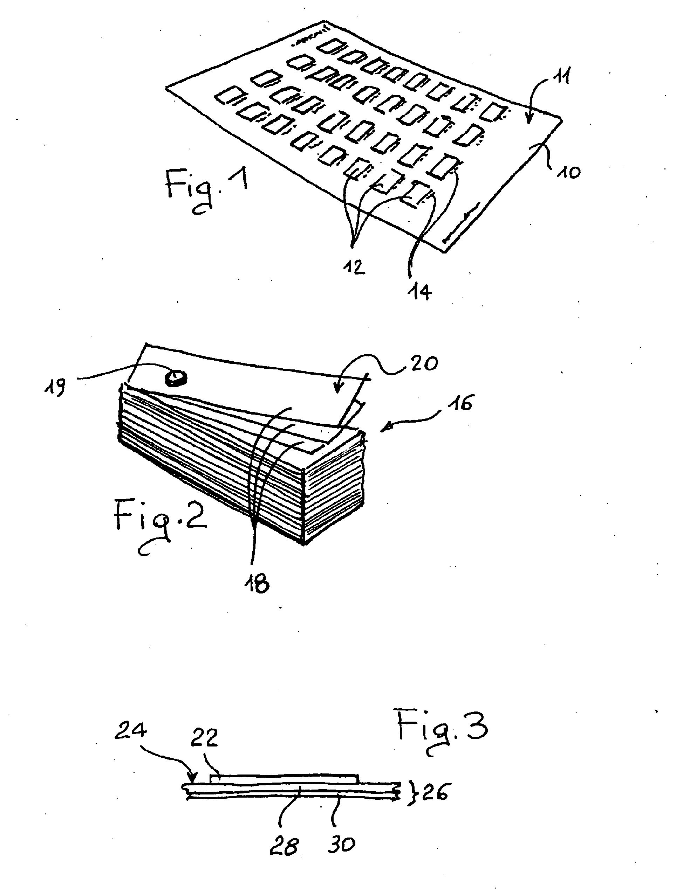

With reference to Figure 1, one type of colour sample chart according to the invention comprises a sheet 10 of a one side coated art paper support on the uncoated surface 11 of which are reproduced colour samples 12, for example but not exclusively relating to colours for vehicle bodywork, possibly of the metallic-effect type.

The colour samples 12 relate to specific areas on the paper support 10 and are preferably accompanied by descriptive captions 14.

Figure 2 is a schematic illustration of another kind of colour sample chart according to the invention, in the form of a swatch 16 with a plurality of strips 18 of a one side coated art paper support held together by a binding system, for example a stud or rivet 19 or the like. Colour samples are reproduced over defined areas or over the complete uncoated surface 20 of the strips 18, for example but not exclusively relating to colours for vehicle bodywork, possibly of the metallic-effect type.

The peculiarity of the present invention, as may be seen in greater detail in the enlarged scale schematic cross-section of Figure 3, is the application of a layer of colouring preparation 22 onto the uncoated surface 24 of a one side coated paper support 26, comprising a sheet of paper 28 having a surface coated with a layer of coating 30. As is known, one side coated paper is produced industrially by applying a coating of coating agent onto one of the two surfaces of a sheet of paper. Various kinds of coating agents are known, the commonest of which is kaolinite. Contrary to the purpose for which one side coated paper is normally used, namely that of reproducing images on the coated surface to ensure better and brighter rendition of their colours, it has surprisingly been found during the course of development of the present invention that applying colour samples to the uncoated surface 24 of the one side coated paper support 26 makes it possible to achieve excellent results, especially when it is a matter of reproducing vehicle bodywork colours, in particular of the metallic-effect type.

It has in fact firstly been discovered that it is possible to apply the same paint products onto the surface of the paper support as are used for application onto vehicle bodywork, achieving colour rendition which is identical to that of the finished product on the bodywork, without there being any need to reproduce the colour formulation using products different from those used on the bodywork. It has secondly been found that it is possible to apply colour samples onto the uncoated surface of a one side coated paper support by using highly efficient methods known in the field of colour sample charts, for example by spreading, so enabling elevated productivity relative to the spray application methods which are usually necessary, for example, in order to achieve worthwhile results when it is a matter of reproducing paints of the metallic-effect type.

Without its being intended that the following should be taken to be an exact explanation of the technical phenomenon on which the present invention is based, it would seem that applying a metallic-effect paint, in particular but not exclusively with an aqueous solvent, onto the uncoated surface of a one side coated paper results in the solvent, in particular but not exclusively water in the case of water-based metallic-effect paint, of the metallic-effect paint being at least partially absorbed, while the metal particles remain on the surface thereof. The paint layer partially penetrates into the paper fibres, but it would seem that the layer of coating on the underlying surface slows or prevents the layer of paint from penetrating completely into said paper. Tests carried out by spreading various layers of paint onto the uncoated surface of the one side coated paper have shown that the resultant layer of paint is thinner than the layer which would be formed by applying the same paint onto the coated surface of a paper, as for example known from patent DE-4413010.

One kind of one side coated paper which was used in the tests carried out by the applicant and yielded particularly worthwhile results is the one side coated art paper "200 gr coated paper color chart paper" manufactured by the Finnish company Walki Visa Oy.

Naturally, the principle of the invention retaining the same, the forms of embodiment and details of performance of the present invention may be varied widely with respect to those described and illustrated without consequently extending beyond the scope of the present invention as defined in the appended claims.

## Claims

1. A method for producing colour sample charts comprising the stages of:
- providing a paper support, and
- applying at least one paint, defining a colour sample, onto at least one portion of said paper support, **characterised in that** the paper support is of the one side coated type, having one coated side and one uncoated side, the at least one paint being applied directly onto the uncoated side of the one side coated paper support.

2. A method according to claim 1, **characterised in that** the at least one paint is applied by spreading.

3. A method according to claim 1 or claim 2, **characterised in that** the at least one paint is a metallic-effect paint.

4. A method according to claim 3, **characterised in that** the at least one metallic-effect paint is a paint suitable for application onto vehicle bodywork.

5. A method according to claim 4, **characterised in that**, prior to application onto the one side coated paper support, additives, flop control agents and/or protective/plasticising agents are added to the at least one metallic-effect paint suitable for application onto vehicle bodywork.

6. A method according to any one of the preceding claims, **characterised in that** the at least one paint is a water-based paint.

7. A colour sample chart comprising a paper support of the one side coated type, having one coated side and one uncoated side, at least one layer of at least one paint being applied directly onto the uncoated side of the one side coated paper support.

8. A colour sample chart according to claim 7, **characterised in that** the at least one paint is a metallic-effect paint.

9. A colour sample chart according to claim 8, **characterised in that** the at least one metallic-effect paint is a metallic-effect paint suitable for application onto vehicle bodywork.

10. A colour sample chart according to any one of claims 7 to 9, **characterised in that** the at least one paint is a water-based paint.

11. A colour sample chart according to any one of claims 7 to 10, produced by any one of the methods of claims 1 to 6.

12. Use of a paper of the one side coated type, having one coated side and one uncoated side, for producing colour sample charts by means of direct application of at least one paint defining a colour sample onto at least one portion of the uncoated side of said paper of the one side coated type.

13. Use of a paper according to claim 12, **characterised in that** the at least one paint is a metallic-effect paint.

14. Use of a paper according to claim 13, **characterised in that** the at least one metallic-effect paint is a metallic-effect paint suitable for application onto vehicle bodywork.

15. Use of a paper according to any one of claims 12 to 14, **characterised in that** the at least one paint is a water-based paint.

16. Use of a metallic-effect paint suitable for application onto vehicle bodywork for producing colour sample charts by means of direct application of the metallic-effect paint onto at least one portion of the uncoated side of a one side coated paper support, having one coated side and one uncoated side.

17. Use of a metallic-effect paint according to claim 16, **characterised in that** the metallic-effect paint is a water-based metallic-effect paint.

## Patentansprüche

1. Ein Verfahren zur Herstellung von Farbprobenkarten umfassend die Schritte:
- Bereitstellen einer Papierauflage, und
- Auftragen von mindestens einer Farbe, die eine Farbprobe definiert, auf mindestens einen Bereich der Papierauflage, **dadurch gekennzeichnet, dass** die Papierauflage von einseitig beschichteter Art ist mit einer beschichteten Seite und einer unbeschichteten Seite, wobei die mindestens eine Farbe direkt auf die unbeschichtete Seite der einseitig beschichteten Papierauflage aufgetragen wird.

2. Verfahren gemäß Anspruch 1, **dadurch gekennzeichnet, dass** die mindestens eine Farbe durch Verteilen aufgetragen wird.

3. Verfahren gemäß Anspruch 1 oder 2, **dadurch gekennzeichnet, dass** die mindestens eine Farbe eine Farbe mit einem metallischen Effekt ist.

4. Verfahren gemäß Anspruch 3, **dadurch gekennzeichnet, dass** die mindestens eine Farbe mit metallischem Effekt eine Farbe ist, die zur Anwendung auf einer Fahrzeugkarosserie geeignet ist.

5. Verfahren gemäß Anspruch 4, **dadurch gekennzeichnet, dass** vor Auftragen auf die einseitig beschichtete Papierauflage Additive, das Umschlagen steuernde Agentien und/oder Schutz/plastifizierende Agentien zu der mindestens einen zum Auftragen auf Fahrzeugkarosserien geeigneten Farbe mit metallischem Effekt zugefügt werden.

6. Verfahren gemäß einem der vorherigen Ansprüche, **dadurch gekennzeichnet, dass** die mindestens eine Farbe eine wasserbasierende Farbe ist.

7. Eine Farbprobenkarte umfassend eine Papierauflage der einseitig beschichteten Art mit einer beschichteten Seite und einer unbeschichteten Seite, mindestens einer Schicht von mindestens einer Farbe, die direkt auf die unbeschichtete Seite der einseitig beschichteten Papierauflage aufgetragen ist.

8. Farbprobenkarte gemäß Anspruch 7, **dadurch gekennzeichnet, dass** die mindestens eine Farbe eine Farbe mit einem metallischen Effekt ist.

9. Farbprobenkarte gemäß Anspruch 8, **dadurch gekennzeichnet, dass** die mindestens eine Farbe mit metallischem Effekt eine zum Auftrag auf eine Fahrzeugkarosserie geeignete Farbe mit metallischen Effekt ist.

10. Farbprobenkarte gemäß einem der Ansprüche 7 bis 9, **dadurch gekennzeichnet, dass** die mindestens eine Farbe eine wasserbasierende Farbe ist.

11. Farbprobenkarte gemäß einem der Ansprüche 7 bis 10, hergestellt mit einem Verfahren gemäß einem der Ansprüche 1 bis 6.

12. Verwendung eines Papiers der einseitig beschichteten Art mit einer beschichteten Seite und einer unbeschichteten Seite zur Herstellung von Farbprobenkarten mittels direkten Auftragens von mindestens einer Farbe, die eine Farbprobe definiert, auf mindestens einen Bereich der unbeschichteten Seite des Papiers der einseitig beschichteten Art.

13. Verwendung eines Papiers gemäß Anspruch 12, **dadurch gekennzeichnet, dass** die mindestens eine Farbe eine Farbe mit einem metallischen Effekt ist.

14. Verwendung eines Papiers gemäß Anspruch 13, **dadurch gekennzeichnet, dass** die mindestens eine Farbe mit metallischem Effekt eine zum Auftragen auf eine Fahrzeugkarosserie geeignete Farbe mit metallischem Effekt ist.

15. Verwendung eines Papiers gemäß einem der Ansprüche 12 bis 14, dadurch charakterisiert, dass die mindestens eine Farbe eine wasserbasierende Farbe ist.

16. Verwendung einer zum Auftragen auf eine Fahrzeugkarosserie geeigneten Farbe mit einem metallischen Effekt zur Herstellung von Farbprobenkarten mittels eines direkten Auftragens der Farbe mit dem metallischen Effekt auf mindestens einen Bereich der unbeschichteten Seite der einseitig beschichteten Papierauflage, die eine beschichtete Seite und eine unbeschichtete Seite aufweist.

17. Verwendung einer Farbe mit einem metallischen Effekt gemäß Anspruch 16, **dadurch gekennzeichnet, dass** die Farbe mit dem metallischen Effekt eine wasserbasierende Farbe mit einem metallischen Effekt ist.

## Revendications

1. Procédé de production de nuanciers d'échantillons de couleurs comprenant les étapes de:
- fourniture d'un support papier, et
- application d'au moins une peinture, définissant un échantillon de couleur, sur au moins une portion dudit support papier, **caractérisé en ce que** le support papier est du type revêtu d'un côté, ayant un côté revêtu et un côté non revêtu, là au moins une peinture étant appliquée directement sur le côté non revêtu du support papier revêtu d'un côté.

2. Procédé selon la revendication 1, **caractérisé en ce que** là au moins une peinture est appliquée par étalement.

3. Procédé selon les revendications 1 ou 2, **caractérisé en ce que** là au moins une peinture est une peinture à effet métallique.

4. Procédé selon la revendication 3, **caractérisé en ce que** là au moins une peinture à effet métallique est une partie appropriée pour une application sur une carrosserie de véhicule.

5. Procédé selon la revendication 4, **caractérisé en ce que**, avant l'application sur le support papier revêtu d'un côté, des additifs, des agents anti-effondrement et/ou des agents de protection/plastification sont ajoutés à la peinture à effets métalliques appropriée pour une application sur une carrosserie de véhicule.

6. Procédé selon une quelconque des revendications précédentes, **caractérisé en ce que** là au moins une peinture est une peinture à base d'eau.

7. Nuancier d'échantillons de couleurs comprenant un support papier du type revêtu d'un côté, ayant un côté revêtu et un côté non revêtu, au moins une couche d'au moins une peinture étant appliquée directement sur le côté non revêtu du support papier revêtu d'un côté.

8. Nuancier d'échantillons de couleurs selon la revendication 7, **caractérisé en ce que** là au moins une peinture est une peinture à effets métalliques.

9. Nuancier d'échantillons de couleurs selon la revendication 8, **caractérisé en ce que** là au moins une peinture à effets métalliques est une peinture à effets métalliques appropriée pour une application sur une carrosserie de véhicule.

10. Nuancier d'échantillons de couleurs selon une quelconque des revendications 7 à 9, **caractérisé en ce que** là au moins une peinture est une peinture à base d'eau.

11. Nuancier d'échantillons de couleurs selon une quelconque des revendications 7 à 10, produit par une quelconque des procédés des revendications 1 à 6.

12. Utilisation d'un papier du type revêtu d'un côté, ayant un côté revêtu et un côté non revêtu, pour produire des nuanciers d'échantillons de couleurs au moyen d'une application directe d'au moins une peinture définissant un échantillon de couleur sur au moins une portion du côté non revêtu dudit papier du type revêtu d'un côté.

13. Utilisation d'un papier selon la revendication 12, **caractérisée en ce que** là au moins une peinture est une peinture à effet métallique.

14. Utilisation d'un papier selon la revendication 13, **caractérisée en ce que** là au moins une peinture à effets métalliques est une peinture à effets métalliques appropriée pour une application sur une carrosserie de véhicule.

15. Utilisation d'un papier selon une quelconque des revendications 12 à 14, **caractérisée en ce que** là au moins une peinture est une peinture à base d'eau.

16. Utilisation d'une peinture à effets métalliques appropriée pour une application sur une carrosserie de véhicule pour produire des nuanciers d'échantillons de couleurs au moyen d'une application directe de la peinture à effets métalliques sur au moins une portion du côté non revêtu d'un support papier revêtu d'un côté, ayant un côté revêtu et un côté non revêtu.

17. Utilisation d'une peinture à effets métalliques selon la revendication 16, **caractérisée en ce que** la peinture à effets métalliques est une peinture à effets métalliques à base d'eau.
